# EUROPÄISCHE PATENTANMELDUNG

(11) **EP 1 634 857 A1**
(43) Veröffentlichungstag der Anmeldung: **15.03.2006**
(21) Anmeldenummer: 05026690.7
(22) Anmeldetag: 15.06.2001
(51) Int. Cl.: C03B 33/033, C03B 33/04

(54) **Verfahren und Vorrichtung zur Herstellung von Glasscheiben beliebiger Kontur aus Flachglas**

(30) Priorität: 21.06.2000 DE 10030388
(62) Teilanmeldung aus: 01940574.5
(71) Anmelder: Schott AG, 55122 Mainz (DE)
(72) Erfinder: Lüttgens, Thomas, 55126 Mainz (DE); Hartmann, Winfried, 55452 Rümmelsheim (DE); Hoetzel, Bernd, 55286 Wörrstadt (DE); Markschläger, Patrick, 55268 Nieder Olm (DE); Neumayr, Andreas, 55116 Mainz (DE)
(74) Vertreter: Sawodny, Michael-Wolfgang

(57) **Zusammenfassung**

Die Erfindung betrifft ein Verfahren zur Herstellung von Glasscheiben beliebiger Kontur aus Flachgläsern umfassend die nachfolgenden Schritte:
- Ritzen von Trennlinien (26, 101, 106, 107) entlang der Kontur bis zu einer Tiefe T_{Glasscheibe} mit Hilfe einer Schneideeinrichtung in mindestens eine Seite des Flachglases (1),
- Positionieren der Glasscheibe (1) auf einer Unterlage (200),
   dadurch gekennzeichnet, dass
- auf das Flachglas (1) eine definierte Kraft F über der Trennlinie lokal mittels einer Kugel oder eines Rädchens (204) aufgebracht wird, so dass ein Bruch entlang der Trennlinien (26, 1010, 106, 107) entsteht, wobei
   der Bruch durch die Gesamtdicke des Flachglases (1) durchgetrieben wird.

## Beschreibung

Die Erfindung betrifft ein Verfahren zur Herstellung von Glasscheiben beliebiger Kontur aus Flachgläsern, wobei in einem ersten Schritt eine Trennlinie entlang einer Kontur bis zu einer vorbestimmten Tiefe mit Hilfe einer Schneideeinrichtung in mindestens eine Seite einer Glasscheibe eingetrieben wird. Sodann wird die Glasscheibe positioniert und vom Flachglas entlang der Kontur getrennt. Insbesondere soll das Verfahren zur Herstellung von Glassubstraten für elektronische Speichermedien eingesetzt werden.

Neben dem Verfahren stellt die Erfindung auch eine Vorrichtung zum Brechen von Glasscheiben beliebiger Kontur aus einem Flachglas zur Verfügung. Auch diese Vorrichtung soll insbesondere zur Herstellung von Glassubstraten für elektronische Speichermedien mit einem Außendurchmesser und einem Innendurchmesser aus einer Glasscheibe eingesetzt werden, wobei eine derartige Vorrichtung eine Unterlage sowie eine Drückeinrichtung umfaßt.

Die Verwendung von Glassubstraten für magnetische Speichermedien, insbesondere Festplatten wird derzeit überwiegend in Laptop-Anwendungen praktiziert. Der Vorteil der Glassubstrate gegenüber den derzeit überwiegend verwendeten Aluminiumsubstraten liegt in der höheren Steifigkeit, Härte,
E-Modul und damit dem besseren Widerstand gegen Stöße und der Verringerung des Flatterns.

Die Anwendbarkeit von Glassubstraten für magnetische Speichermedien, insbesondere Festplatten wurde bislang insbesondere dadurch erschwert, daß Gläser nur mit sehr hohem technischen Aufwand mit geeigneten Oberflächeneigenschaften zur Verfügung gestellt werden konnten.

Dies trifft insbesondere für die Herstellung von Glassubstraten durch Pressen und Floaten zu, aber auch auf Glasbänder, die durch einen Ziehprozeß, wie beispielsweise im US-Patent 5,725,625 offenbart, hergestellt wurden.

So ist es bei den gezogenen Glasbändern gemäß dem US-Patent 5,725,625 notwendig, die Oberfläche des gezogenen Glases zwei Läpp- und zwei weiteren Polierschritten zu unterziehen.

Mit einem neuartigen Verfahren, wie in der am 05.01.2000 unter Serial-No. 09/477,712 beim US-Patentamt angemeldeten Anmeldung, deren Offenbarungsgehalt vollumfänglich in die vorliegende Anmeldung mit aufgenommen wird, dargelegt, ist es gelungen ein gezogenes Glassubstrat anzugeben, das für eine Ebenheit bzw. Flatness ≤ 25 µm, insbesondere ≤ 10 µm, eine Waviness < 100 Å, insbesondere < 40 Å, eine Dickenvariation von ± 20 µm, insbesondere ± 15 µm und eine Oberflächenrauhheit < 10 Angström, insbesondere < 5 Ä verfügt.

Die Oberflächeneigenschaften, Ebenheit, Waviness und Oberflächenrauhheit werden gemäß bekannter Methode, wie beispielsweise Standardmeßmethoden für Display-Substrate wie in SEMI D15-1296 von SEMI (1996) beschrieben, bestimmt. Unter Ebenheit wird die Abweichung von einer ideal ebenen Oberfläche gemessen über die Gesamtoberfläche verstanden, unter Welligkeit bzw. Waviness der mittlere Wellenlängenanteil der Abweichung von einer idealen Oberfläche bezogen auf eine mittelgroße Bezugsstrecke und unter Oberflächenrauhigkeit die Abweichung im kurzen Wellenlängenbereich bezogen auf eine kurze Auswertemeßstrecke. Für derartig gute Oberflächen ist eine Nachbearbeitung wie beispielsweise für die Oberflächen gemäß der US-A-5725625 nicht mehr notwendig. Es ist daher erstrebenswert, für Glassubstrate Verfahren zur Herstellung von elektronischen Speichermedien anzugeben, bei denen auf eine Nachbearbeitung der Oberflächen ganz verzichtet oder deutlich reduziert werden kann.

Verfahren, wie sie derzeit zum Stand der Technik zählen, eignen sich nicht für die Weiterbearbeitung der gezogenen bzw. gefloateten Glasbänder mit einer Ebenheit ≤ 25 µm, einer Waviness < 100 Å, einer Dickenvariation von ± 20 µm sowie einer Oberflächenrauhheit < 10 Å, bei dem es auf Schnitte mit glatten Kanten ankommt, wobei Schnitte mit einer beliebig vorgegebenen Kontur möglich sind und eine Beschädigung der Oberfläche während des Bearbeitungsprozesses weitgehend ausgeschlossen werden kann.

Ein Ansatz, sowohl Splitter als auch Ausmuschelungen und Mikrorisse zu vermeiden, besteht im Trennen von Glas auf der Basis thermisch generierter mechanischer Spannung. Hierbei wird der Strahl einer Wärmequelle, der auf das Glas gerichtet ist, mit fester Geschwindigkeit relativ zu dem Glas bewegt und so eine hohe thermomechanische Spannung erzeugt, die dazu führt, daß das Glas Risse bildet. Diese thermomechanische Spannung wird durch einen dem Wärmestrahl nachlaufenden Kühlspot noch verstärkt. Der notwendigen Eigenschaft der Wärmequelle, die thermische Energie lokal, d.h. mit einer Genauigkeit besser einem Millimeter, besonders bevorzugt besser als 100 Mikrometer, was den typischen Schnittgenauigkeiten entspricht, positionieren zu können, genügen Infrarotstrahler, spezielle Gasbrenner und insbesondere Laser. Laser haben sich wegen ihrer guten Fokussierbarkeit, guten Steuerbarkeit der Leistung sowie der Möglichkeit der Strahlformung und damit der Intensitätsverteilung auf Glas bewährt und durchgesetzt. Das Glas wird durch den Laserstrahl mit Startritz zunächst angeritzt und anschließend mechanisch gebrochen. Dieses Verfahren wird als sogenannte Ritzen-Brechen-Methode bezeichnet.

Laserstrahl-Trennverfahren, die durch eine lokale Erwärmung durch den fokussierten Laserstrahl in Verbindung mit einer Kühlung von außen eine thermomechanische Spannung bis über die Bruchfestigkeit des Werkstoffes induzieren, sind aus der EP 0 872 303 A2, der DE 693 04 194 T2 und der DE 43 05 107 C2 sowie der US 5,120,926 bekannt geworden.

Die GB-A-1433563 zeigt ein Verfahren, bei dem mit Hilfe eines Lasers eine Trennlinie in ein Glassubstrat eingebracht wird und das Glas dann entlang dieser Trennlinie mit Hilfe einer Schneideeinrichtung, die eine Härte größer als die Härte von Glas aufweist, gebrochen wird. Beispiele für derartige Schneideeinrichtungen sind Diamant- oder Aluminium-Schneideeinrichtungen.

Aus der US-2372215 ist ein alternatives Ritz-Brech-Verfahren bekanntgeworden. Bei diesem Verfahren wird mit Hilfe eines Schneidewerkzeuges, beispielsweise eines Diamanträdchens, eine Trennlinie in eine Glasoberfläche bis zu einer Tiefe T eingeritzt und das Glas anschließend beispielsweise durch mechanische Einwirkung entlang dieser Trennlinie gebrochen.

In einer bevorzugten Ausführungsform wird das Brechen des Glases entlang der Trennlinie T dadurch erreicht, daß in das Glas gezielt Temperaturspannungen eingebracht werden.

Glassubstrate, insbesondere für elektronische Speichermedien, lassen sich nach der vorbeschriebenen "Ritzen-Brechen-Methode" gemäß dem Stand der Technik, insbesondere wegen ihrer Dicke nicht mit der notwendigen Qualität herstellen.

Aufgabe der Erfindung ist es, ein Verfahren zur Herstellung von Glasscheiben beliebiger Kontur aus Flachgläsern, insbesondere Glassubstrate für Speichermedien, anzugeben, das möglichst wenige Prozeßschritte umfaßt und bei dem die einzelnen Glassubstrate für elektronische Speichermedien weitgehend ohne Beschädigung der beim Glasziehprozeß erreichten Oberflächen hergestellt werden können. Diese Verfahren sollen insbesondere die beim Glaszieh- oder Floatprozeß erreichten Oberflächeneigenschaften einer Ebenheit ≤ 25 µm, einer Waviness < 100 Å, einer Dickenvariation ± 20 µm sowie einer Oberflächenrauhheit < 10 Å nicht wesentlich verschlechtern.

Erfindungsgemäß wird diese Aufgabe dadurch gelöst, daß bei einem Verfahren nach dem Oberbegriff des Anspruches 1 nach Positionieren der Glasscheibe auf die Glasscheibe eine definierte Kraft mit Hilfe einer Drückeinrichtung aufgebracht wird, so daß ein Bruch entlang der Trennlinie entsteht und der Bruch durch das gesamte Substrat durchgetrieben wird. In einer vorteilhaften Ausführungsform der Erfindung ist vorgesehen, daß bevor die Glasscheibe auf der Unterlage gebrochen wird, diese gewendet wird, so daß die Seite, in die die Trennlinie bzw. der Ritz eingetrieben wurde, auf der Unterlage aufliegt.

In einer ersten Ausführungsform der Erfindung wird als Unterlage eine großflächige Unterlage definierter Härte verwandt. Ist die Unterlage drehbar ausgeführt, so kann beim Aufbringen der Unterlage auf die Glasscheibe der Mittelpunkt des durch die beispielsweise ringförmige Trennlinie definierten Innen- bzw. Außenkreises mit dem Drehpunkt der Unterlage bzw. des Arbeitstisches in Übereinstimmung gebracht werden. Mittels eines Drückwerkzeuges, beispielsweise eines Rädchens oder einer Kugel wird mit definierter Kraft auf das Glassubstrat gedrückt. Der entstandene Bruch wird durch das Drehen des Tisches durch die Glasscheibe vollständig hindurchgetrieben.

In einer alternativen Ausführungsform wird das Glas zwischen zwei flexiblen Platten angeordnet. Das sich hieraus ergebende Paket wird beispielsweise auf einen Ring als Unterlage, der einen Durchmesser, der größer als der durch die eine Kontur der Trennlinie definierte Durchmesser ist, aufgelegt. Sodann wird von der Gegenseite mit einem Stempel gedrückt, wobei der Durchmesser des Stempels kleiner ist als der der Öffnung. Durch die vom Stempel aufgebrachte Kraft werden die flexiblen Platten und das Glas gebogen. Es bauen sich Zugspannungen im Riß auf und der Riß wird durch das Material durchgetrieben, so daß ein Außenbereich eines Flachglases komplett von einem Innenbereich abgetrennt werden kann.

Der Vorteil dieses Verfahrens liegt insbesondere darin, daß durch das flexible Material ein Ausbrechen am Rand durch Schubspannungen zuverlässig verhindert wird und so die Oberfläche des Glassubstrates vor Ausbrechungen und Ausmuschelungen geschützt wird.

Bei einem dritten erfindungsgemäßen Verfahren wird das Flachglas, aus dem die Glasscheibe herausgebrochen werden soll, auf eine Platte mit einer Tasche aufgelegt. An die Tasche wird bevorzugt ein Vakuum angelegt, so daß sich auf der Scheibe eine ringförmige Flächenlast ergibt. Es entstehen dann Zugspannungen im Ritz, die dazu führen, daß der Ritz durch das Material durchgetrieben wird, so daß ein Außenbereich komplett von einem Innenbereich getrennt werden kann. Durch die beispielsweise ringförmige Tasche wird erreicht, daß die Zugspannungen am Riß am größten sind. Anstatt eines Vakuums an der Unterseite des Glases kann auch mit Druckluft oder einem Fluiddruck auf der gegenüberliegenden Seite gearbeitet werden.

Alle erfindungsgemäßen Verfahren eignen sich sowohl für das Brechen bzw. Trennen eines Innenloches aus der Glasscheibe wie auch der Glasscheibe selbst aus dem Flachglas. Unter Brechen bzw. Trennen wird in der vorliegenden Anmeldung verstanden, daß die Trennlinie vollständig durch das Glassubstrat hindurchgetrieben wird, ohne daß Innen- und Außenbereich physikalisch voneinander getrennt sein müssen..

Das Separieren des Innenbereiches bzw. das Vereinzeln des Außenbereiches entlang der durch den Schritt des Brechens bzw. Trennens durch das Flachglases hindurchgetriebenen Trennlinien kann in einem weiteren Verfahrensschritt erfolgen. Hierzu werden beispielsweise Temperaturdifferenzen zwischen Innen- und Außenbereich und/oder zwischen Außenbereich und dem umgebenden Flachglas aufgebaut. Hierzu kann der Innenbereich beispielsweise gezielt durch flüssigen Stickstoff gekühlt werden. Zum Vereinzeln des Außenbereichens kann das umgebende Flachglas beispielsweise mit heißer Luft von 200° C erwärmt werden.

Die Erfindung soll nachfolgend anhand der Figuren beispielhaft beschrieben werden.

### Es zeigen:

- Figur 1A: einen Ritz einer Trennlinie in einem Flachglassubstrat mit einer mechanischen Schneideeinrichtung
- Figur 1B: das Brechen des Flachglases entlang der Trennlinie
- Figuren 2A und 2B: das Eintreiben einer Trennlinie bis zur Tiefe T mit Hilfe einer Lasereinrichtung in ein Flachglas
- Figur 3: Brechen einer Glasscheibe auf einer Unterlage mit einer vorbestimmten Härte
- Figur 4: Brechen einer Glasscheibe mit einem Stempel in Kombination mit einem Ring
- Figur 5: Brechen einer Glasscheibe mit Hilfe von Vakuum

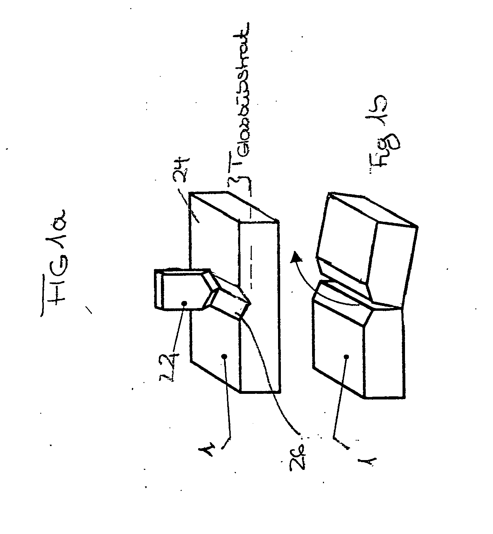

In den Figuren 1A und 1B ist das Durchtrennen eines Flachglases 1 mit Hilfe von Ritzen und Brechen, der sogenannten Ritz-Brech-Methode dargestellt. Bei der Ritz-Brech-Methode wird mit Hilfe einer Schneideeinrichtung, die auf die Glasoberfläche 24 aufgesetzt wird, eine Trennlinie 26 bis zu einer vorbestimmten Tiefe T_{Glassubstrat} in das Flachglas 1 geritzt.

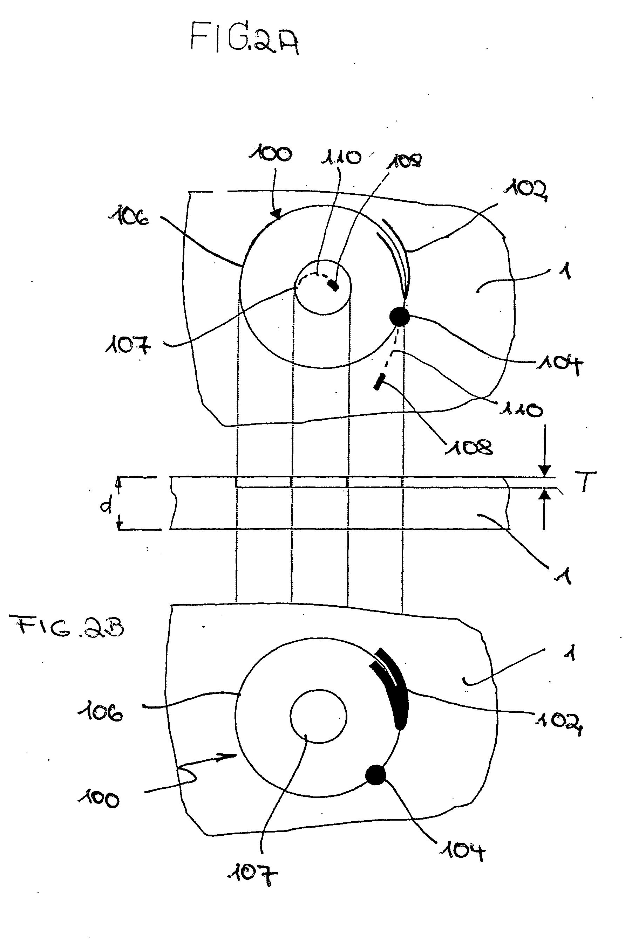

Nachdem mit Hilfe des Schneidwerkzeuges 22 das Glas entlang einer Trennlinie geritzt wurde, wird es wie in Figur 2B dargestellt, entlang der Trennlinie gebrochen. Beim Schneidwerkzug 22 kann es sich beispielsweise um eine mechanische Schneideeinrichtung wie ein Schneiderädchen handeln.

Besonders vorteilhaft ist es, wenn das Ritzen der Trennlinie in die Oberfläche 24 der Glasscheibe mit Hilfe einer Lasereinrichtung erfolgt. Ein besonders bevorzugtes Laser-Trenn-Verfahren ist in den Figuren 2A bis 2B beschrieben.

Beim Ritzen und Brechen mit Hilfe einer Laser-Schneide-Einrichtung wird die Oberfläche des Glases nur in geringem Ausmaß beschädigt. Auf eine Schutzbeschichtung kann daher gänzlich verzichtet werden.

Die Figur 2A zeigt das Grundprinzip des Anritzen für das Herausbrechen eines kreisringförmigen Glassubstrates für elektronische Speichermedien, hier einer Harddisk 100, aus einem Flachglas 1 mittels eines Laserstrahls. Das als Ausgangsprodukt dienende Flachglas 1 hat typischerweise eine Dicke d im Bereich von 0,3 mm bis 5 mm.

Im Beispiel nach Figur 2A ist das Laserstrahlprofil so ausgebildet, daß auf dem Flachglas 1 ein V-förmiger Brennfleck 102 entsteht, der entsprechend der zu trennenden kreisförmigen Kontur gekrümmt ist. Ihm läuft ein Kühlspot 104 nach, der die vom Laserstrahl erzeugte thermomechanische Spannung bis über die Bruchfestgikeit des Glases erhöht. Dieser Kühlspot kann zum Beispiel durch Aufblasen eines Kühlgases, vorzugsweise von kalter Luft oder eines Wasser-/Luftgemisches, realisiert werden. Der V-förmige Brennfleck kann vorzugsweise, wie beispielsweise in der EP 0 873 303 A2 beschrieben, realisiert werden.

Anstelle des dargestellten V- bzw. U-förmigen Brennfleckes 102 können auch andere Brennfleckgeometrien, zur Anwendung kommen.

Das Durchtrennen des Flachglases 1 erfolgt in zwei Schritten.

Im ersten Schritt gemäß Figur 2A sind die Parameter bezüglich Laserleistung, Laserstrahlprofil, Fokusablage, Vorschubgeschwindigkeit, d.h. Geschwindigkeit der Relativbewegung zwischen Brennfleck 102, Flachglas 1 und Kühlung 104 so eingestellt, daß eine thermomechanische Spannung im Glas aufgebaut wird, die das Glas bis zu einer vorgegebenen Tiefe T ritzt. Die Ritztiefe T liegt dabei typischerweise im Bereich von 0,08 bis 0,3 mm.

Mit dieser Einstellung der Parameter kann sowohl die Außenkontur 106 für das Glassubstrat wie auch die Innenkontur 107 für die Innenbohrung des Glassubstrates geritzt werden, wobei jeweils ein mechanisch aufgebrachter Riß 108 als Startriß dient, der mit den bekannten Methoden, beispielsweise einem Schneidrädchen, erzeugt wird. Mit besonderem Vorteil wird der Startriß 108 mit einem Laserritz 110 so weitergeführt, daß dieser tangential in die Kreiskrümmung der Außen- und Innenkontur übergeht. Dieses Anritzen unterstützt ein versatzloses Trennen der in sich geschlossenen Konturen 106 und 107.

Gemäß der Erfindung wird das Glas entlang der Trennlinie gebrochen, wie nachfolgend beschrieben.

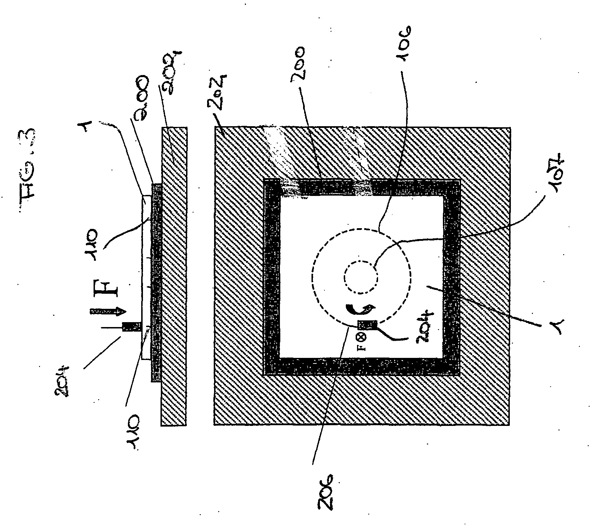

In Figur 3 ist eine erste Möglichkeit dargestellt, mit deren Hilfe die beispielsweise mittels Laser wie zuvor beschrieben eingebrachten Ritze für den Innendurchmesser und den Außendurchmesser einr Hardisk 100 durch die Dicke in die Tiefe getrieben werden können. Erfindungsgemäß ist vorgesehen, daß im Anschluß an das Laserritzen der Trennlinien für den Innendurchmesser bzw. den Außendurchmesser das zu bearbeitende Flachglas 1 gewendet und auf einer Unterlage 200 mit definierter Härte positioniert wird. Besonders vorteilhaft ist es, wenn die Unterlage 200 auf einen drehbaren Arbeitstisch 202 aufgelegt wird. Bei Verwendung eines drehbaren Arbeitstisches ist es vorteilhaft, bei der Ausrichtung der Glasscheibe, aus der das kreisförmige Glassubstrat, ergebend beispielsweise eine Harddisk, ausgeschnitten wird, so anzuordnen, daß der Mittelpunkt der Harddisk und der Drehpunkt des Arbeitstisches 202 möglichst genau aufeinanderliegen. Mittels einer Drückeinrichtung, beispielsweise in Gestalt eines Rädchens 204 oder einer Kugel wird mit einer definierten Kraft F über der Trennlinie für den Außendurchmesser bzw. der Trennlinie für den Innendurchmesser auf das Glassubstrat 1 gedrückt. Der entstandene Bruch 206 wird durch das Drehen des Arbeitstisches 202 weitergetrieben. In Abhängigkeit von der Position des Drucks 206 im Glassubstrat kann sich der Abstand zum Rädchen oder der Kugel ändern. Dieser Einfluß wird durch eine regelbare Kraft kompensiert.

Die Härte der Unterlage 200 korreliert mit der aufzubringenden Brechkraft. Generell gilt, daß je geringer die Härte der Unterlage 200 ist, desto geringer auch die erforderliche Brechkraft ist. Allerdings läßt sich der Prozeß bei weichen Unterlagen schlechter kontrollieren.

Des weiteren wurde herausgefunden, daß die Positioniergenauigkeit des Rädchens 204 auf dem Ritz 110 Einfluß auf die Winkligkeit der Werkstückkante hat. Bei breiten Rädchen ist die Positionierung unkritisch. Bei den kleinen Innendurchmessern sind jedoch breite Rädchen wegen der großen Durchbiegung nur bedingt einsetzbar. Für das Brechen des Innendurchmessers empfiehlt sich daher die Verwendung einer Kugel.

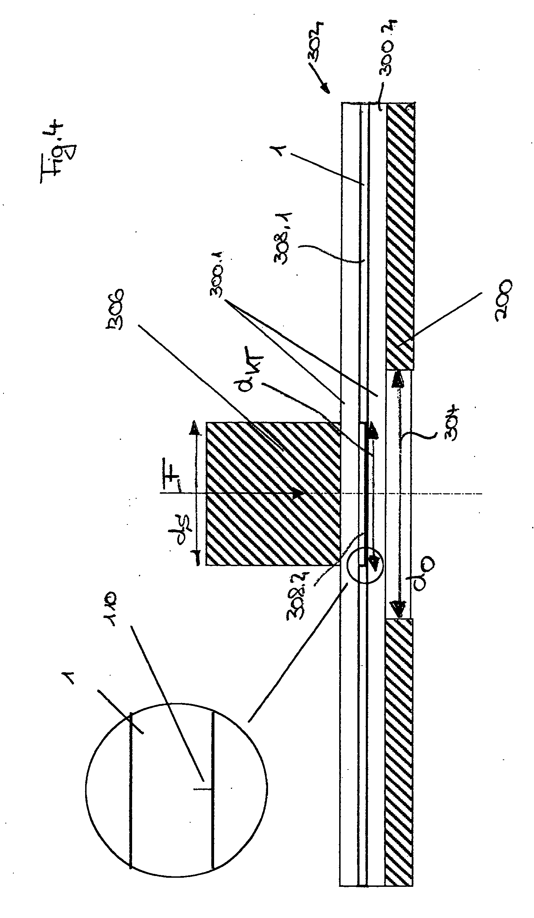

In Figur 4 ist ein zu Figur 3 alternatives Verfahren zum Brechen von Glasscheiben aus Flachglas 1 bekanntgeworden. Das Flachglas 1, aus dem eine Glasscheibe beliebiger Kontur herausgebrochen werden soll, liegt zwischen zwei flexiblen Platten 300.1 und 300.2, die aus Plexiglas gefertigt sein können. Die Platten 300.1 und 300.2 schließen das Flachglas 1 ein und bilden eine Art Paket 302 aus. Das Paket aus Flachglas 1 sowie den flexiblen Platten 300.1 und 300.2 liegt auf einer Unterlage 200 mit einer Öffnung 304 auf. Der Durchmesser der Öffnung d_{O} ist stets größer als der Durchmesser der kreisbogenförmigen Trennlinie d_{KT}.

Zum Herausbrechen der Glasscheibe aus dem Flachglas entlang der Trennlinie wird von der der Öffnung gegenüberliegenden Seite 304 beispielsweise mit einem Stempel 306 mit einer Kraft F gedrückt. Der Stempel 306 weist einen Durchmesser d_{S} auf, der geringer ist als der Durchmesser der Öffnung d_{O}. Durch die Kraft F werden die flexiblen Platten 300.1 und 300.2 sowie das Flachglas 1 gebogen. Es entsteht im Riß bzw. der Trennlinie 110 eine Zugspannung. Durch die Kraft F wird der Riß durch das Material 1 hindurchgetrieben, so daß der Außenbereich des Flachglases 308.1 vollständig vom Innenbereich 308.2, der beispielsweise der Kontur der herauszubrechenden Glasscheibe und damit dem Außendurchmesser entspricht, getrennt wird. Besonders vorteilhaft an dem Verfahren gemäß der zweiten Ausführungsform der Erfindung ist, daß durch das flexible Material 300.1, 300.2, das das Flachglas 1 umschließt, das Ausbrechen am Rand durch Schubspannungen verhindert werden kann. Des weiteren wird die Oberfläche des Flachglases geschützt.

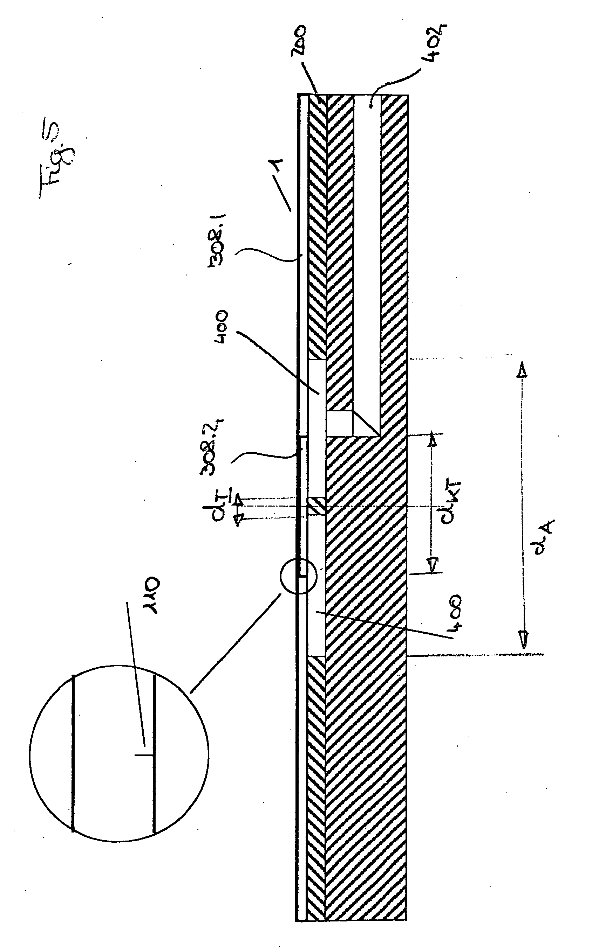

In Figur 5 ist ein drittes Verfahren gemäß der Erfindung gezeigt. Das Flachglas 1 liegt auf einer Unterlage 200 mit einer ringförmigen Tasche 400 auf. Die ringförmige Tasche hat einen Innendurchmesser d_{I}, der kleiner ist als der Durchmesser d_{KT} der kreisförmigen Trennlinie, die entweder dem Innendurchmesser oder dem Außendurchmesser der Glasscheibe, die aus dem Flachglas herausgetrennt werden soll, entspricht. Der Außendurchmesser der Tasche d_{A} ist größer als der Durchmesser der kreisbogenförmigen Trennlinie d_{KT}. Wird die Tasche an Vakuum über Anschlüsse 402 angelegt, so ergibt sich eine ringförmige Flächenlast auf das Flachglas 1. Die ringförmige Flächenlast bewirkt eine Zugspannung im Ritz bzw. der Trennlinie 110. Dies führt zum Durchtreiben des Risses durch das Material, so daß ein Außenbereich 308.1 wie bei der Ausführungsform gemäß Figur 4 komplett von einem Innenbereich 308.2 getrennt wird.

Alle zuvor beschriebenen Verfahren eignen sich sowohl für das Trennen bzw. Brechen der gesamten Glasscheibe aus dem Flachglas 1 wie auch das Trennen bzw. Brechen der Innenbohrung, beispielsweise wenn die Glasscheibe für eine Harddisk verwendet wird.

Die ringförmige Tasche 400 bewirkt, daß die Zugspannungen am Riß am größten sind. Das Verfahren ist jedoch auch mit einer lochförmigen Tasche, d.h. eine Tasche ohne einen Mittelteil mit Durchmesser D_{I}, denkbar. Dann muß lediglich Sorge dafür getragen werden, daß der Durchmesser D_{A} einer solchen lochförmigen Tasche größer ist als der Durchmesser der kreisbogenförmigen Trennlinie D_{KT}.

In einer alternativen Ausführungsform kann anstelle eines Vakuums über einen Vakuumanschluß 402 auf der Unterseite des Flachglases 1 auch Druckluft auf der der Tasche gegenüberliegenden Seite angelegt werden.

Nachfolgend soll noch ein konkretes Ausführungsbeispiel der Erfindung gegeben werden:
Aus einer Flachglasscheibe mit den Abmessungen 80 x 80 x 0,7 mm wird eine Harddiskscheibe mit einem Außendurchmesser von 65 mm und einem Innendurchmesser von 20 mm wie folgt herausgebrochen: Zunächst wird mit einer Laserschneideanlage ein Ritz auf der Oberseite wie folgt eingebracht: Zunächst wird die Glasscheibe mit Diamant angeritzt, der eine Initialverletzung am Kreisumfang einbringt. Sodann wird mit einem Laser, der zu einem V-förmigen Brennfleck aufgeweitet wird, aufgeheizt, wobei durch einen Äthanol- Luft- Strahl gekühlt wird. Nachdem die Trennlinien eingebracht sind, wird nach der Stempel/Ring-Methode der Innendurchmesser und der Außendurchmesser herausgebrochen bis gilt: für den Innendurchmesser Ø d(Stempel) = 20 mm, d(Ring) = 50 mm, h(Plexiglas) = 2 mm; für den Außendurchmesser Ø d(Stempel) = 65 mm, d(Ring) = 80 mm, h(Plexiglas) = 2 mm, wobei der Stempel über eine kraftgesteuerte Linearachse zugestellt wird.

Das Vereinzeln bzw. Separieren der gebrochenen bzw. getrennten Teile geschieht für das Außenteil mit heißer Luft von ca. 200°C und für das Innenteil mit flüssigem Stickstoff.

Mit dem vorliegenden Verfahren werden erstmals Ritz-Brech-Methoden angegeben, mit denen Glassubstrate aus Glasscheiben ohne Beschädigung der Oberfläche herausgebrochen werden können.

### Bezugszeichenliste

- 1: Flachglas
- 22: Schneidewerkzeug
- 24: Glasoberfläche
- 26: Trennlinie
- 100: Harddisk
- 102: Brennfleck des Lasers
- 104: Kühlspot
- 106: Außenkontur
- 107: Innenkontur
- 108: Riß
- 110: Laserritz
- 200: Unterlage
- 202: drehbarer Arbeitstisch
- 204: Rädchen
- 206: Bruch
- 300.1:
- 300.2: flexible Platten
- 302: Paket
- 304: Öffnung der Unterlage
- 306: Stempel
- 308.1: Innenbereich
- 308.2: Außenbereich
- 400: Tasche
- 402: Vakuumanschluß

## Patentansprüche

1. Verfahren zur Herstellung von Glasscheiben beliebiger Kontur aus Flachgläsern, umfassend die nachfolgenden Schritte:
1.1. Ritzen von Trennlinien (26, 101, 106, 107) entlang der Kontur bis zu einer Tiefe T_{Glasscheibe} mit Hilfe einer Schneideeinrichtung in mindestens eine Seite des Flachglases (1),
1.2. Positionieren der Glasscheibe (1) auf einer Unterlage (200),
**dadurch gekennzeichnet, dass**
1.3. auf das Flachglas (1) eine definierte Kraft F über der Trennlinie lokal mittels einer Kugel oder eines Rädchens (204) aufgebracht wird, so dass ein Bruch entlang der Trennlinien (26, 1010, 106, 107) entsteht, wobei
1.4. der Bruch durch die Gesamtdicke des Flachglases (1) durchgetrieben wird.

2. Verfahren nach Anspruch 1,
**dadurch gekennzeichnet, dass**
die Unterlage (200) drehbar ausgeführt ist.

3. Verfahren nach Anspruch 2,'
**dadurch gekennzeichnet, dass**
der durch das Aufbringen der Kraft F entlang der bzw. den Trennlinien (26, 101, 106, 107) entstandene Bruch durch das Drehen der Unterlage (200) weiter getrieben wird.

4. Verfahren nach einem der Ansprüche 2 bis 3,
**dadurch gekennzeichnet, dass**
die Glasscheibe (1) auf der Unterlage (200) derart positioniert wird, dass der Drehpunkt der Unterlage (200) mit dem Mittelpunkt durch eine ringförmige erste und zweite Trennlinie (106, 107) definierten Außen- bzw. Innendurchmessers zusammenfällt.

5. Verfahren gemäß der Ansprüche 1 bis 4,
**dadurch gekennzeichnet, dass** die Glasscheiben ein Glassubstrat für ein Speichermedium ist.

6. Verfahren gemäß einem der Ansprüche 1 bis 5,
**dadurch gekennzeichnet, dass** die Schneideeinrichtung eine Laser-Schneideeinrichtung oder eine mechanische Schneideeinrichtung ist.

7. Verfahren gemäß einem der Ansprüche 1 bis 6,
**dadurch gekennzeichnet, dass** die Unterlage (200) eine vollflächige Unterlage ist.

8. Verfahren nach einem der Ansprüche 1 bis 7,
**dadurch gekennzeichnet, dass** die Unterlage eine Öffnung umfasst.

9. Verfahren gemäß Anspruch 1 bis 7,
**dadurch gekennzeichnet, dass** die Öffnung eine kreisförmige Kontur aufweist.

10. Verfahren nach einem der Ansprüche 1 bis 9,
**dadurch gekennzeichnet, dass** das Flachglas derart positioniert wird, dass die Trennlinie zur Öffnung bzw. zu den Öffnungen ausgerichtet ist.

11. Verfahren nach einem der Ansprüche 1 bis 10,
**dadurch gekennzeichnet, dass** die Glasscheibe (1) vor Aufbringen auf die Unterlage (200) gewendet wird, so dass die Seite der Glasscheibe (1), in die die Ritze eingetrieben sind, auf der Unterlage (200) aufliegt.

12. Vorrichtung zum Brechen von Glasscheiben beliebiger Kontur aus
einem Flachglas mit
12.1. einer Unterlage (200)
**dadurch gekennzeichnet, dass**
12.2. die Vorrichtung eine Positioniervorrichtung zum Positionieren des zu brechenden Flachglases auf der Unterlage (200) umfasst und Mittel zum lokalen Aufbringen einer vorbestimmten Kraft, wobei die Mittel zum lokalen Aufbringen der Kraft, Rädchen oder Kugeln (204) sind und die Mittel zum Aufbringen der Kraft derart ausgestaltet sind, dass diese über einer Trennlinie im Flachglas positioniert werden können.
